# EUROPÄISCHE PATENTANMELDUNG

(11) **EP 2 243 901 A2**
(43) Veröffentlichungstag der Anmeldung: **27.10.2010**
(21) Anmeldenummer: 10003015.4
(22) Anmeldetag: 23.03.2010
(51) Int. Cl.: E04H 6/02, E04D 13/04, F24J 2/52

(54) **Tragrahmen, Rahmengestell und damit gebauter Carport**

(30) Priorität: 14.04.2009 DE 102009017337
(71) Anmelder: Widmayr, Josef, 85298 Scheyern - Vieth (DE)
(72) Erfinder: Widmayr, Josef, 85298 Scheyern - Vieth (DE)

(57) **Zusammenfassung**

Es wird ein einfach aufgebauter, flach bauender und leicht zu montierender Tragrahmen (1) zur Befestigung von Plattenelementen (3) zur geneigten Überdachung einer Grundfläche vorgestellt. Dieser Tragrahmen (1) weist mindestens Längs- (4a) und Querträger (4b) auf, die Rahmenfelder bilden, auf welchen die Plattenelemente (3) aufliegen. Der Tragrahmen (1) ist als selbsttragendes, vorgefertigtes Bauteil ausgeführt, bei dem die Längs- (4a) und Querträger (4b) aus in derselben Ebene stumpf aufeinanderstoßenden und wasserdicht miteinander verbundenen, gleichzeitig Kanäle 9 zum Sammeln und Abführen von Niederschlagswasser bildenden Trägern gleichen Profils bestehen. Der Tragrahmen (1) wird mit den Plattenelementen (3), die als Solarelemente ausgebildet sein können, komplett vormontiert. Die Plattenelemente können mit Klemmelementen 7 an den Trägern (4a,4b) befestigt werden. Eine Dichtung 11 kann vorgesehen sein.
Mehrere Tragrahmen (1) können mit Hilfe von Verbindungsflanschen (32) und Verbindungsträgern (4d) zu einem Rahmengestell zusammengefügt werden. Aus komplett vormontierten Tragrahmen (1), die auf Pfosten aufgesetzt, und miteinander in Serie zu einem Rahmengestell zusammengefügt werden, kann zB. ein Carport mit beliebig vielen Stellplätzen in Modulbauweise zusammengebaut werden, bis hin zu einer Carport-Zeile. Darüberhinaus lassen sich der erfindungsgemäße Tragrahmen bzw. das Rahmengestell auch zum Bau vielfältiger anderer Überdachungen wie Vordächer, Schleppdächer, Unterstände, Scheunenüberdachungen usw. einsetzen.

## Beschreibung

Die Erfindung betrifft einen Tragrahmen gemäß dem Oberbegriff des Anspruchs 1, ein Rahmengestell aus einer Mehrzahl von miteinander verbundenen solchen Tragrahmen sowie einen damit gebauten Carport.

Ein gattungsgemäßer Tragrahmen ist aus der DE 20 2007 010 520 U1 bekannt.

Er dient als Tragkonstruktion für Photovoltaikmodule und besteht aus miteinander verschraubten Längs- und Querträgern unterschiedlicher Höhe, an die jeweils unten und oben in Längsrichtung verlaufende Kanäle zum Sammeln und Ableiten von Niederschlagswasser angeformt sind. Auf die Photovoltaikmodule auftreffendes Niederschlagswasser wird über die in verschiedenen Ebenen angeordneten Kanäle kaskadenförmig abgeleitet. Die Konstruktion genügt lediglich geringeren Anforderungen an Wasserdichtheit, u.a. schon deshalb, weil im Auflagebereich der Plattenelemente, dort wo die Längs- und Querträger aufeinander stoßen, zwischen diesen Lücken vorhanden sind.

Die Trägerprofile sind von kompliziertem, unterschiedlichem Querschnitt. Der ganze Tragrahmen baut relativ hoch und muß aus den einzelnen Trägerprofilen vor Ort zusammengeschraubt und montiert werden, was einen hohen Montageaufwand erfordert.

Da die Querträger auf den unteren, seitlich verlaufenden Kanalwänden aufliegen und mit diesen verschraubt sind, ist eine Abstützung des Tragrahmens auf den Untergrund nur unter den Längsträgern sinnvoll, da andernfalls, bei Abstützung unter den Querträgern, die Längsträger hängend wären, was eine entsprechend starke Dimensionierung der Schraubverbindung erfordern würde. Der Rahmen ist insofern nicht selbsttragend.

Die Aufgabe vorliegender Erfindung besteht darin, einen gattungsgemäßen Tragrahmen derart weiterzubilden, daß die aufgezeigten Nachteile des Standes der Technik vermieden werden. Es soll bei einfacherem und (auch hinsichtlich der Abstützung) flexiblerem Aufbau des Tragrahmens zugleich eine niedrige Bauhöhe und auch bessere Wasserdichtheit erzielt werden, wobei gleichzeitig die Montage vor Ort vereinfacht werden soll.

Des Weiteren soll angegeben werden, wie aus mehreren solchen Tragrahmen ein Rahmengestell zusammengesetzt und ein Carport erstellt werden kann.

Diese Aufgaben werden von den Gegenständen der selbständigen Ansprüche gelöst.

Die Erfindung macht sich die Erkenntnis zunutze, daß eine einfache und flache Konstruktion eines gleichzeitig wasserableitenden Tragrahmens dadurch erzielt werden kann, daß dieser zumindest Längs- und Querträger gleichen Profils aufweist, die stumpf aufeinanderstoßend, wasserdicht miteinander verbunden sind. Die Träger dienen sowohl als Wasser sammelnde und ableitende, als auch als tragende Elemente eines selbsttragenden, daher an beliebiger Stelle abstützbaren Tragrahmens. Da solch ein einfacher Tragrahmen in einem Herstellerwerk bereits vorzufertigen ist, verringert sich der Montageaufwand vor Ort: Es muß dort nur noch die Komplettierung mit den Plattenelementen und die Endmontage des komplett vormontierten Tragrahmens auf der Baustelle erfolgen.

Eine beliebige Mehrzahl solcher vorgefertigten und komplett vormontierten Tragrahmen können miteinander, gewissermaßen in modularem Baukastensystem, zu einem Rahmengestell verbunden werden, wenn ein Verbindungsflansch an den jeweiligen Stirnseiten der zugeordneten Längs- oder Querträger (je nachdem, ob eine Quer- oder Längsseite verbunden werden soll) vorgesehen ist. An diesem Verbindungsflansch wird dann ein beiden Tragrahmen gemeinsamer Verbindungsträger befestigt, z.B. durch Verschraubung.

Erfindungsgemäße Tragrahmen sowie Rahmengestelle können insbesondere in Verbindung mit z.B. Solarelementen zum Bau von Carports, Schleppdächern, Scheunendächern, Haus-Vordächern, Unterständen, Wartehäuschen, Bahnsteigüberdachungen o.ä. verwendet werden. Carports können als Einzel-,

Doppel-, Mehr- und Vielfach-Carports bis hin zu ganzen Parkplatz-Überdachungszeilen zum Witterungsschutz (im Sommer: Beschattung, im Winter Schutz vor Schnee) ausgeführt werden. Auch Hausdächer können bei entsprechendem Unterbau mit Hilfe der erfindungsgemäßen Tragrahmen sowie Rahmengestelle gestaltet werden.

Zur Erstellung eines Carports können auf einer Mehrzahl von Metall- oder Holzpfosten entweder ein vorgefertigter und komplett vormontierter Tragrahmen aufgelagert und befestigt werden. Oder im Falle eines zu erstellenden Mehrfach-Carports bis hin zu einer Carport-Zeile wird ein Rahmengestell auf einer Reihe von Metall- oder Holzpfosten zusammengebaut, indem die mit Verbindungsflanschen versehenen, vorgefertigten und vormontierten Tragrahmen mit jeweils zwei Tragrahmen gemeinsamen Verbindungsträgern verbunden werden, die zuvor auf Metall- oder Holzpfosten befestigt worden sind.

Aus der DE 202006 020 180 U1 ist ein Solardach u.a. für Carports bekannt mit zick-zack-förmigen, gegeneinander geneigten Flächen von Solarelementen und Reflexionsflächen. In den Randbereichen der Module sind nur an ihren Längsseiten, also gewissermaßen in den "Tälern" Längsrinnen zum Sammeln und Ableiten von Wasser ausgebildet.

Die DE 93 10 063 U1 lehrt, an einem Schrägdach Solarelemente zu befestigen, indem diese in Bolzen eingehängt werden, die sich quer über die Seitenschenkel eines entlang der Dachneigung verlegten U-Profils erstrecken. Das U-Profil, das seinerseits mittels Sturmhaken an Dachlatten befestigt ist, dient dabei auch der Wasserableitung, wobei das Wasser sodann auf das Dach selbst geleitet oder der Dachrinne zugeführt wird.

Vorteilhafte Weiterbildungen des erfindungsgemäßen Tragrahmens sind in den Unteransprüchen gekennzeichnet.

So können Randträger mit gleichen Profilen vorgesehen sein, die ebenfalls stumpf in derselben Ebene aufeinanderstoßend wasserdicht sowohl untereinander als auch mit den Längs- und Querträgern verbunden sind. Der wasserführende Grund liegt dann in allen Trägern in einer Ebene.

Es ist aber auch möglich, Randträger tieferliegend anzuordnen. So können, bei entsprechend höheren Schenkeln z.B. des untersten Randträgers, von diesem größere Wassermengen aufgenommen und abgeleitet werden.

An mindestens einer Randseite eines Tragrahmens kann ein mit den jeweiligen Stirnseiten von rechtwinklig einmündenden Längs- oder Querträgern (je nach Verbindungsseite) und Randträgern (sofern vorhanden) fest verbundener flacher Verbindungsflansch vorgesehen sein. An diesem kann entweder ein Randträger oder ein Verbindungsträger zum Anschluß eines weiteren Tragrahmens befestigt sein.

Wird z.B. an einer Seite ein Verbindungsträger, an der gegenüberliegenden Seite ein Randträger angebracht, kann daraus ein Zweier- Rahmengestell für einen Doppel-Carport entstehen. Bei Beidseitig vorgesehenen Verbindungsträgern können an beiden Seiten weitere Tragrahmen angefügt werden.

Verbindungsträger bzw. Randträger weisen vorteilhaft das gleiche Profil wie die Längs- und Querträger auf.

Durch Ausschnitte im Verbindungsflansch entsprechend dem Querschnitt der Stirnseiten von einmündenden Längs- oder Querträgern und Randträgern (sofern vorhanden), wird erreicht, daß das abzuleitende Niederschlagswasser ungehindert vom jeweiligen Längs- bzw. Querträger bzw. Randträger in den Verbindungsträger übertreten kann.

Ein längs am Verbindungsflansch befestigter Randträger oder Verbindungsträger kann an seiner dem Verbindungsflansch zugewandten Seitenwandung ebenfalls solche, den Stirnseiten von einmündenden Längs- bzw. Querträgern entsprechende Ausnehmungen aufweisen. Dann kann der wasserführende Grund im Rand- oder Verbindungsträger in derselben Ebene liegen wie derjenige der Längs- und Querträger.

Der wasserführende Grund des Verbindungsträgers bzw. Randträgers kann aber auch tieferliegend vorgesehen sein. Dann brauchen keine Ausnehmungen in den Seitenwandungen vorhanden sein.

Bei Verwendung von Kastenprofilen für Längs-, Quer- und Verbindungsträger, liegt der wasserführende Grund -ohne Notwendigkeit von Ausnehmungen in den Seitenwandungen des Verbindungsträgers- selbstverständlich automatisch in einer Ebene.

Der Fachmann ist in der Lage, sich die möglichen Kombinationen verschiedener Profile und die sich daraus ergebenden Wechselwirkungen in Hinsicht auf die Wasserführung im Rahmen seines Könnens selbst zu erarbeiten.

Als Trägerprofile werden vorteilhaft nach oben offene U-Profile verwendet, oder H-förmige Profile, mit senkrecht angeordneten freien Schenkeln.

Es können aber in alternativer Ausführung auch geschlossene Kastenprofile (z.B. quadratisch oder rechteckig) Anwendung finden oder H-Profile mit waagrecht angeordneten freien Schenkeln, wobei das Niederschlagswasser an deren Oberseite abfließt. In diesem Fall wird die seitliche Führung des Niederschlagswassers von den Seitenwandungen der Plattenelemente übernommen. Diese müssen dazu selbstverständlich ausreichend hoch sein und ausreichend beabstandet voneinander.

Die Befestigung der Plattenelemente auf den vorgefertigten Trägern, die im Rahmen der Vormontage erfolgt, kann mittels Klebung geschehen. Dies ist insbesondere bei Kastenprofilen als Träger geeignet, aber auch z.B. bei mit seitlichen Flügeln versehenen U-Profilen. Der Kleber dient dabei zugleich der Abdichtung zwischen Plattenelementen und Trägern.

Alternativ oder zusätzlich zur Befestigung der Plattenelemente mittels Kleber können diese auch mittels Klemmelementen an den Trägern befestigt werden.

Besonders gut wassergeschützt ist die überdachte Grundfläche, wenn zwischen Trägern und Plattenelementen eine Abdichtung vorgesehen wird. Diese kann beim Vorhandensein freier Schenkel aus einer über diese gestülpten Falz-Dichtung bestehen. Es kann aber auch eine Flachdichtung vorgesehen sein, und zwar nicht nur bei kastenförmigen Trägerprofilen oder Profilen mit Schenkeln, an denen Seitenflügel vorgesehen sind. Sondern auch bei Profilen mit freien Schenkeln. Da die Dichtungen nämlich vorteilhaft an den Plattenelementen fixiert sind, ergeben sich bei breiterer Ausbildung der Flachdichtungen große, den Einbau und die Ausrichtung der Plattenelemente erleichternde Paßtoleranzen.

Ein Plattenelement kann aus mehreren, bevorzugt abgedichtet miteinander verbundenen Einzelelementen zusammengesetzt sein. So können auch kleinere Plattenelemente verwendet werden, ohne deswegen die Tragstruktur unnötig kleingliedrig ausbilden zu müssen.

Plattenelemente können thermische oder Photovoltaik-Solarelemente sein, die mitsamt ihrer Verkabelung oder Verrohrung auf den Trägern vormontiert sind.

Weitere Merkmale, Einzelheiten und Vorteile der Erfindung werden aus nachfolgender Beschreibung von Ausführungsbeispielen unter Zuhilfenahme der Zeichnung ersichtlich.

Es zeigen:
- Fig. 1 :: einen erfindungsgemäßen Tragrahmen in Draufsicht ;
- Fig. 2 :: eine vergrößerte Schnitt-Teilansicht entlang der Linie II-II in Fig.1;
- Fig. 3a,b :: je eine perspektivische Ansicht eines Kreuzungspunktes;
- Fig. 4 :: eine perspektivische Ansicht eines Befestigungspunktes;
- Fig. 5 a - e:: Ansichten verschiedener Ausführungen von Trägerprofilen, Befestigungen und Dichtungen;
- Fig. 6 :: eine Seitenansicht entlang einer Verbindung zweier in einem Carport verwendeter Tragrahmen;
- Fig. 7 :: eine perspektivische Ausschnitts-Seitenansicht eines Verbindungsflansches mit einmündendem Quer- und Randträger
- Fig. 8 :: eine perspektivische Schnitt-Teilansicht eines Tragrahmens mit montiertem Verbindungsträger von schräg vorne
- Fig. 9 :: eine Vorderansicht (Überblick und Detail) der Tragrahmen- Befestigung an einem Pfosten aus Metall
- Fig. 10:: eine Vorderansicht (Überblick und Detail) der Tragrahmen- Befestigung an einem Pfosten aus Holz

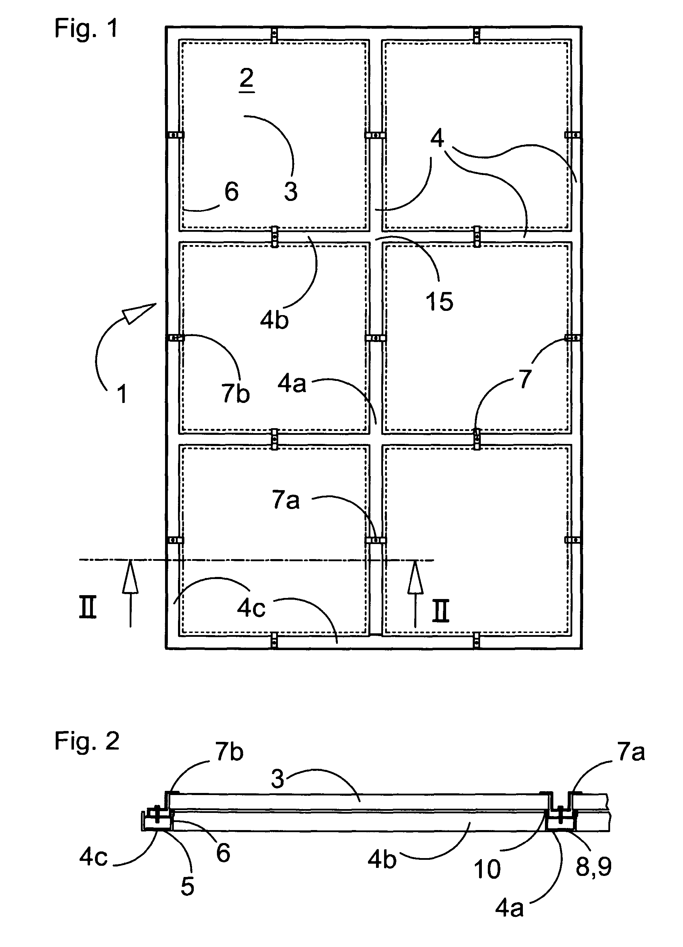

Fig. 1 zeigt eine Draufsicht auf einen erfindungsgemäßen Tragrahmen 1 zur Befestigung von Plattenelementen 3 zur geneigten Überdachung einer Grundfläche. Es sind parallel und mit Abstand zueinander angeordnete Träger 4 vorgesehen, die aus Längsträgern 4a, Querträgern 4b und Randträgern 4c bestehen. Die Träger 4 können aus Baustahl, nichtrostendem Edelstahl, Aluminium oder Kunststoff sein und jeweils mit geeignetem Oberflächenschutz versehen sein. Beispielsweise kann Baustahl vorzugsweise verzinkt, Aluminium eloxiert sein. Auch eine Lackierung oder Pulverbeschichtung ist möglich.

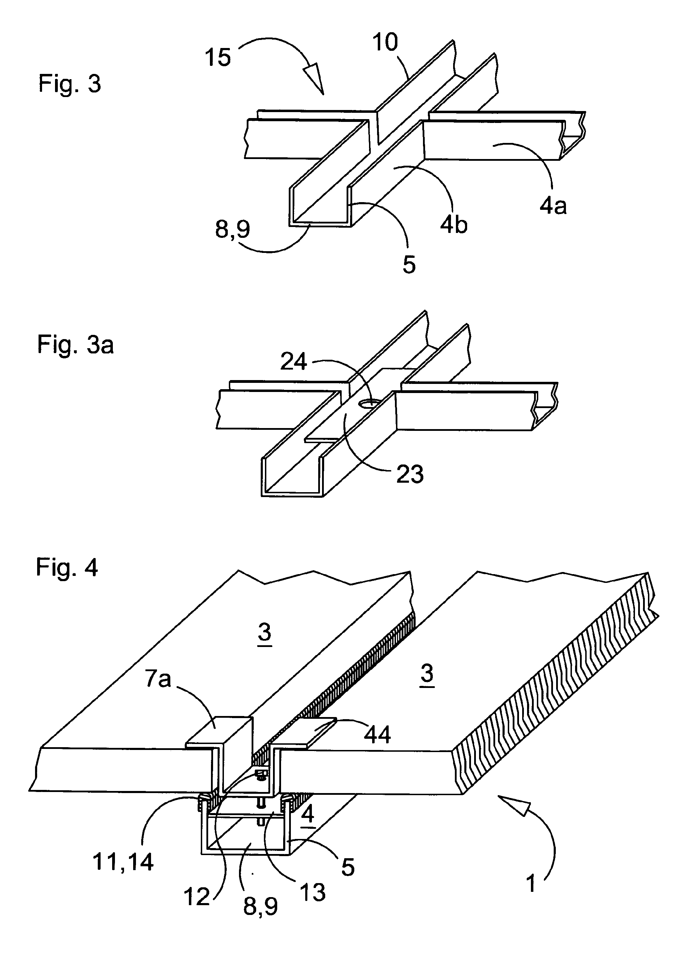

Die Träger 4 stoßen an den Kreuzungspunkten 15 in einer Ebene stumpf aufeinander, s.a. Fig. 3. Sie sind an den Stoßstellen miteinander wasserdicht verbunden, so daß Kanäle 9 zur Wasserführung entstehen. Dabei sind zumindest die Längs- und Querträger 4a, 4b von gleichem Profil und so miteinander verbunden, daß der wasserführende Grund 8 in einer gemeinsamen Ebene liegt. Die Verbindung der Träger 4 kann z.B. durch Schweißen erfolgen. Auch andere Verbindungsarten sind bei entsprechenden Werkstoffen sowie konstruktiver Detailgestaltung der Verbindungsstellen möglich, wie Verpressen, Verlöten, Vernieten oder Vergießen.

Als Trägerprofile sind hier nach oben offene U-Profile 5 vorgesehen. Alternativ können auch andere Profile, wie z.B. hier nicht dargestellte H-Profile mit senkrecht oder waagrecht angeordneten freien Schenkeln vorgesehen sein, oder geschlossene z.B. quadratische, rechteckige oder auch dreieckförmige Kastenprofile.

Erforderlichenfalls lassen sich, wie in Fig.3a am Beispiel eines U-Profils dargestellt, Versteifungsbleche 23 zwischen die Schenkel eines U-Profils 5 oder eines H-Profils einschweißen. Dies kann aus statischen Gründen zur Vermeidung eines Einbiegens der U-Schenkel bei größeren freitragenden Abständen sinnvoll sein.

Werden solche Versteifungsbleche 23 mittig mit einem Loch 24 versehen, so können an dieser Stelle demontierbare Halterungen z.B. Ringösen befestigt werden, mit deren Hilfe später der gesamte komplett vormontierte Tragrahmen 1 mitsamt Solarelementen und deren Verkabelung bzw. Verrohrung zur Endmontage auf Pfosten durch ein Hebemittel angehoben und in seine Endposition verbracht werden kann.

Auch kann damit eine statische Unterstützung oder sogar vollständige Aufhängung des Tragrahmens 1 im montierten Zustand z.B. durch Zugseile oder Zugstangen erfolgen, an denen der Tragrahmen 1 aufgehängt ist. Dies kann z. B. insbesondere bei Einbau des Tragrahmens in Schleppdächer oder Vordächer sinnvoll sein. Bei Vordächern wird bekanntlich oft eine Seite des Vordaches direkt an einer Wand abgestützt, das gegenüberliegende, äußere Ende an schrägen, in der Wand verankerten Seilen oder Zugstäben aufgehängt.

Von den Trägern 4 werden Rahmenfelder 2 gebildet. Die Abstände zwischen den Trägern 4 sind so bemessen, daß die auf den eine plane Ebene bildenden Oberseiten 10 (vgl. Fig.2) der Träger 4 aufliegenden Plattenelemente 3 die jeweils zugeordneten Trägerabschnitte teilweise überdecken. Dies wird in Fig. 1 durch die gestrichelten Linien, die die (verdeckten) Innenschenkel 6 der jeweils ein Rahmenfeld 2 bildenden Träger 4 darstellen, verdeutlicht.

Die Plattenelemente 3 können Einzelelemente sein oder aus mehreren zusammengefügten Einzelelementen bestehen. Es können sowohl thermische als auch photovoltaische Solarelemente als Plattenelemente 3 verwendet werden, wobei hier auf die zeichnerische Darstellung von Verrohrungen oder Verkabelungen verzichtet werden kann. Aber auch Plattenelemente 3 in Form einfacher Abdeckelemente ohne weitere Funktion als die des Abdeckens ist möglich.

Die Plattenelemente 3 sind mittels Klemmelementen 7 an den Trägern 4 befestigt, wobei an solchen Trägern 4, die zwischen zwei Plattenelementen 3 liegen, beidseitige Klemmelemente 7a vorgesehen sind, die beide zugeordneten Plattenelemente 3 fixieren. An den Randträgern 4c kommen einseitige Klemmelemente 7b zum Einsatz. Die Anzahl je Plattenelement 3 vorzusehender Klemmelemente 7 kann je nach Größe der Plattenelemente 3 und Festigkeitserfordernissen unterschiedlich sein, hier im Beispiel sind je Plattenelement 3 vier Klemmelemente 7 angeordnet.

Aus Fig. 2, die eine vergrößerte Schnitt-Teilansicht entlang der Linien II-II in Fig.1 zeigt, sowie aus Fig. 4, die einen Befestigungspunkt vergrößert in perspektivischer Ansicht zeigt, sind Details der Befestigung der Plattenelemente 3 ersichtlich:
In die U-Profile 5 sind zwischen deren Seitenschenkeln als Befestigungselemente 13 dienende Bleche eingefügt, z.B. eingeschweißt. Die beidseitigen Klemmelemente 7a sind U-förmig mit zwei waagrecht abgebogenen Halteflügeln 44 ausgebildet, von denen jeder auf die obere Fläche eines Plattenelementes 3 greift. Die U-Schenkellängen der beidseitigen Klemmelemente 7a sind so an die Dicke der Plattenelemente 3 und an die Position des Befestigungselementes 13 angepasst, daß auch im eingebauten und verspannten Zustand ein Abstand zwischen U-Grund und Befestigungselement 13 besteht. Die beidseitigen Klemmelemente 7a weisen mittig im im Grund ein Loch zum Durchgriff eines Anzugselementes12, hier im Beispiel eine Gewindeschraube, auf. Mittels dieser wird das beidseitige Klemmelement 7a am als Gegenlager dienenden, ebenfalls mit einem Loch oder einer Gewindebohrung versehenen Befestigungselement 13 und damit am U-Profil 5 verspannt.

Die einseitigen Klemmelemente 7b sind stufenförmig ausgebildet, wie aus Fig.2 ersichtlich. Sie weisen nur einen Halteflügel auf, der auf die Plattenelement-Oberfläche greift. Im Zusammenwirken mit einem rechtwinklig abgebogenen Ende, das sich auf dem Befestigungselement 13 abstützt, kann das einseitige Klemmelement 7b und damit das Plattenelement 3 mit dem Befestigungselement 13 bzw. dem als U-Profil 5 ausgebildeten Randträger 4c verspannt werden.

Zwischen den Trägern 4 und den Plattenelementen 3 ist eine Dichtung 11 vorgesehen, s. Fig. 4. Sie kann bei U-Profilen 5 als Falz-Dichtung 14 ausgebildet sein, die die Oberseiten 10 der freien Schenkel umgreift. Solcherart abgedichtet, kann die Dachhaut wasserdicht aber auch flugschneedicht ausgebildet werden.

Falls keine hohen Anforderungen an Wasserdichtheit oder Flugschneedichtheit gestellt werden, kann auf eine Abdichtung zwischen Trägern 4 und Plattenelementen 3 verzichtet werden.

Aus Fig. 2 ist ersichtlich, daß Längsträger 4a, Querträger 4b und Randträger 4c von gleichem Profil, nämlich U-Profil 5 und derart miteinander verbunden sind, daß der wasserführende Grund 8 der Kanäle 9 in ein und derselben Ebene liegt.

Es ist auch möglich, einen oder mehrere Randträger 4c tieferliegend so anzuordnen, daß deren wasserführender Grund 8 mit denjenigen der anderen Träger 4 nicht in einer Ebene, sondern eben tiefer liegt. Wird z.B. der unterste querliegende Randträger 4c derart tieferliegend angeordnet und gleichzeitig die Schenkelhöhe des U-Profils um das selbe Maß erhöht, so können einerseits oben die Plattenelemente 3 plan aufliegen, zugleich entsteht durch die höhere Schenkelhöhe ein größerer Kanal-Querschnitt, der in der Lage ist, größere Mengen Wasser aufzunehmen und abzuführen, die beim untersten Quer-Randträger 4c anfallen können.

Erfindungsgemäß wesentlich ist, daß zumindest die Längs- und Querträger 4a, 4b von gleichem Profil und in einer Ebene liegend angeordnet sind.

Es wäre im Rahmen der Erfindung liegend sogar eine "Minimal-Konfiguration" eines Tragrahmens 1 möglich, die nur aus gekreuzten Längs- und Querträgern 4a, 4b besteht, unter völligem Verzicht auf Randträger 4c. Das gesammelte Wasser würde dann einfach am Ende der jeweiligen Längs- und Querträger 4a, 4b entweder frei ablaufen bzw abtropfen, oder könnte in einen oder mehrere der dort vorzusehenden, den Tragrahmen 1 tragenden Pfosten eingeleitet werden.

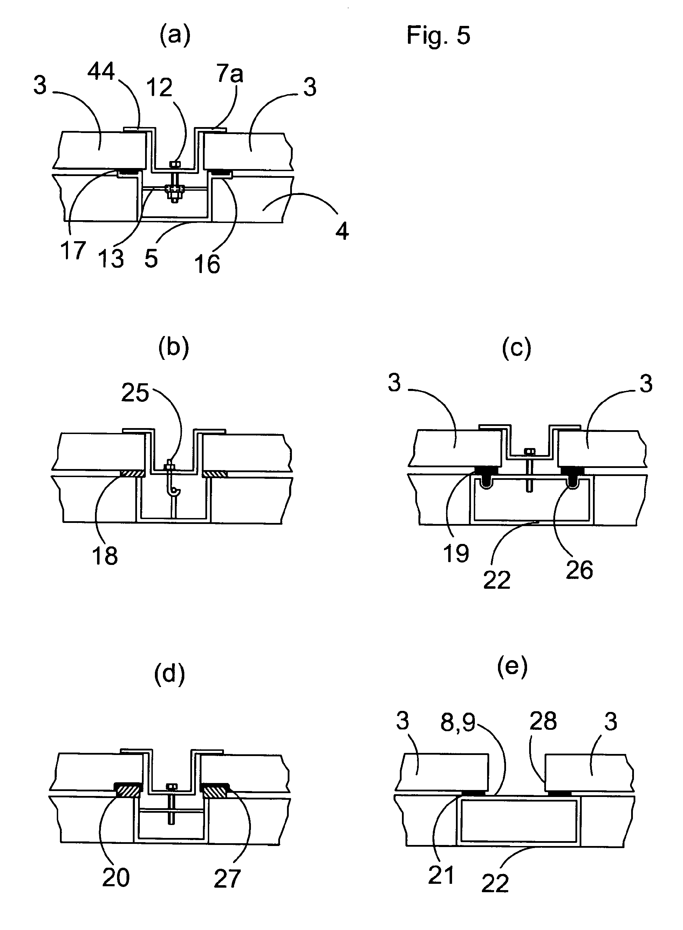

In Fig. 5a-e sind verschiedene alternative Ausführungsformen von TrägerProfilen, Befestigungs- und Abdichtungsmöglichkeiten dargestellt.

Fig. 5a zeigt die Verwendung eines U-Profils 5 mit Seitenflügeln 16, mit darin eingelassener Flachdichtung 17. Die Verspannung des beidseitigen Klemmelementes 7a mit dem Befestigungselement 13 erfolgt mit einer Gewindeschraube als Anzugselement 12, die in eine zuvor am Befestigungselement 13 fixierte Mutter geschraubt wird. Solch eine Mutter kann etweder angeschweißt sein oder eine handelsübliche Karosseriemutter mit Befestigungsclip sein, die in eine rechteckige Ausstanzung im Befestigungs-element 13 eingeclipst wird.

Gemäß Fig.5b finden zwei ineinander gehakte Hakenschrauben 25 zur Verspannung Verwendung. Zur Abdichtung sind auf die Unterseiten der Plattenelemente 3 rundum aufgeklebte Flachdichtungen 18 vorgesehen.
Fig. 5c zeigt die Konstruktion eines Tragrahmens 1 mit einem Kastenprofil 22 mit Nuten 26. Darin sind Profil-Flachdichtungen 19 eingelassen.
In der in Fig. 5d dargestellten Ausführungsform ist vorgesehen, in Ausnehmungen 27 in den Plattenelementen 3 umlaufende, blockförmige Dichtungen 20 mit rechteckigem Querschnitt einzubringen.

Die Befestigung der Plattenelemente 3 gemäß Fig. 5e erfolgt ausschließlich durch Klebung. Auf das Kastenprofil 22 oder auf das Plattenelement 3 wird Kleber 21 aufgebracht. Dieser übernimmt sowohl die Befestigung der Plattenelemente 3 als auch die Abdichtung der Dachhaut.

Es ist zu ergänzen, daß auch eine kombinierte Befestigung der Plattenelemente 3 sowohl geklebt als auch mittels Klemmelementen 7 möglich ist, und zwar nicht nur, wie dargestellt, bei geschlossenen Kastenprofilen 22, sondern auch bei anderen Profilen, wie z.B. U- oder H-Profilen.

Auch ist es möglich, beidseitig klebende Dichtungen, z.B. Flachdichtungen 17,18 zu verwenden.

Wie ferner aus den Fig. 5c und 5e erkennbar, sind bei Tragrahmen-Konstruktionen mit geschlossenen Kastenprofilen 22 die Oberseiten der Kastenprofile 22 der wasserführende Grund 8. Die Seitenwandungen 28 der Plattenelemente 3 dienen zugleich als Seitenwände der wasserführenden Kanäle 9.

Die Metall-Gestelle der Tragrahmen 1, werden komplett im Werk vorgefertigt, z.B. zusammengeschweißt und mit Oberflächenschutz versehen. Nach Anlieferung in diesem gewissermaßen "unbestückten" Zustand werden die einzelnen Tragrahmen 1 vor Ort, d.h. in einer Montagehalle des Handwerksbetriebes oder auf der Baustelle vormontiert, d.h. mit den Plattenelementen 3 bestückt. Werden Solarelemente als Plattenelemente 3 verwendet, umfasst die Vormontage auch das Anbringen der Verrohrung bzw. Verkabelung bis zu Verbindungsstellen.An solchen Verbindungsstellen wird später bei der Endmontage die tragrahmenseitige Verrohrung bzw Verkabelung mit der bauseitigen verbunden.

Eine beliebige Mehrzahl von bestückten, vormontierten Tragrahmen 1 können quasi im Baukasten-System modulartig miteinander zu einem Rahmengestell 38 verbunden werden, z.B zur Abdeckung eines Carports 29 (Einzel- oder Doppel oder Mehrfach-Carport bis hin zu einer ganzen Carport-Zeile, was hier alles unter dem Sammelbegriff "Carport" zu verstehen ist).

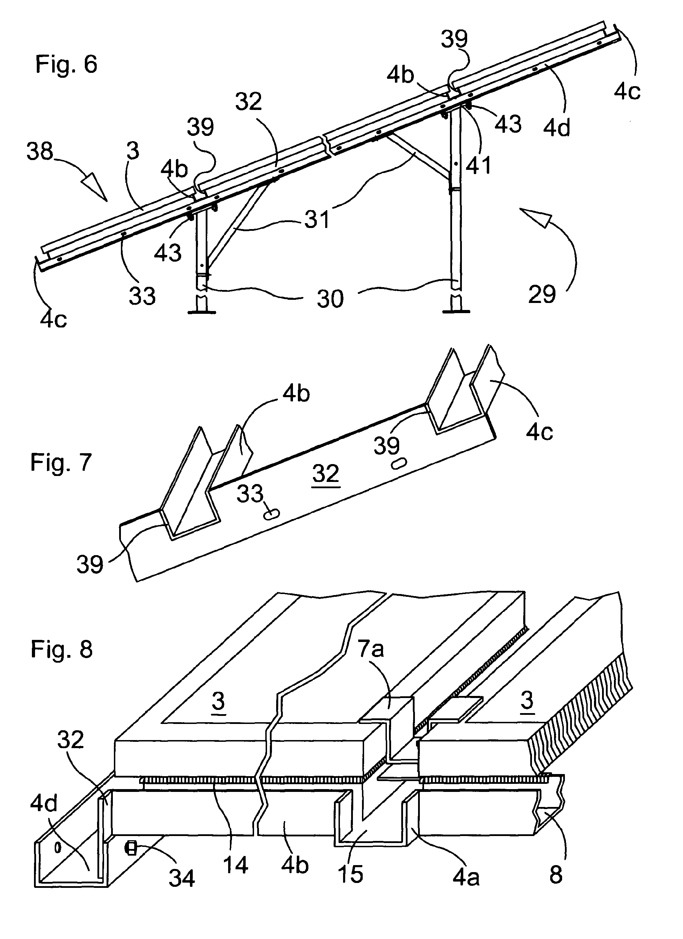

Die Zusammenfügung einzelner vormontierter Tragrahmen 1 zu einem Rahmengestell 38 erfolgt während des Montagevorganges auf der Baustelle, bei dem, wie Fig. 6 am Beispiel eines zu erstellenden Carports entnommen werden kann, die Tragrahmen 1 auf z.B. Metallpfosten 30 (möglich sind auch Holzpfosten 35) gesetzt, sowie üblicherweise aber nicht zwingend, zusätzliche Längsverstrebungen 31 angebracht werden. Es ist auch möglich, nur an einigen Metallpfosten 30 von z.B. einer ganzen Carport-Zeile Längsverstrebungen 31 vorzusehen, je nach Erfordernissen der Statik.

Ein solcher Tragrahmen 1, der zur Verbindung mit einem anderen Tragrahmen 1 zu einem Rahmengestell 38 vorgesehen ist, weist an der Verbindungsseite (hier im Beispiel in Fig.6 ist dies die schräg verlaufende Längsseite) keine Randträger 4c auf. Vielmehr ist ein flacher Verbindungsflansch 32 vorgesehen, der an den rechtwinklig einmündenden Querträgern 4b sowie, soweit vorhandenen, quer verlaufenden Randträgern 4c befestigt wird.

Soll die Verbindung der Tragrahmen 1 an einer Breitseite erfolgen, gilt entsprechendes: Der Verbindungsflansch ist an den einmündenden Längsträgern 4a sowie, soweit vorhanden, längs verlaufenden Randträgern 4c zu befestigen.

Soll ein Tragrahmen 1 nur mit einem weiteren Tragrahmen 1 verbunden werden, so braucht nur an der einen zu verbindenden Seite ein Verbindungsflansch 32 vorgesehen sein. Soll ein Tragrahmen 1 mit zwei weiteren Tragrahmen 1 verbunden werden, so sind selbstverständlich an zwei, (gegenüberliegenden) Seiten Verbindungsflansche 32 anzubringen.

Eine perspektivische Seiten-Teilansicht eines solchen flachen Verbindungsflansches 32 mit rechtwinklig einmündendem Querträger 4b und Randträger 4c ist in Fig. 7 dargestellt. Der Verbindungsflansch 32 weist an den Stellen, an denen Querträger 4b sowie der obere Randträger 4c und der untere, hier nicht dargestellte, Randträger 4c münden, Ausschnitte 39 entsprechend dem Träger-Querschnitt auf und ist mit den Enden der Querträger 4b sowie des oberen und unteren Randträgers 4c wasserdicht verbunden, beispielsweise angeschweißt. Auch andere oben bereits genannte Verbindungsarten sind bei entsprechenden Werkstoffen und konstruktiver Detailgestaltung der Verbindungsstellen möglich. Der Verbindungsflansch 32 weist ferner eine Vielzahl von Befestigungslöchern 33 auf, die zur einfacheren Montage als Langloch ausgebildet sein können.

Der Verbindungsflansch 32 (bzw. bei beidseitiger Verbindung mit weiteren Tragrahmen: die Verbindungsflansche 32) wird (bzw. werden) bereits bei der Herstellung des Tragrahmens im Werk angeschweißt.

Auf der Baustelle brauchen dann nur noch die so im Werk vorgefertigten sowie im Handwerksbetrieb oder ebenfalls an der Baustelle vormontierten (d.h. mittels Plattenelementen 3 bzw. Solarelementen samt Verrohrung bzw. Verkabelung komplettierten) Tragrahmen 1 mittels eines in beiden Seitenschenkeln ebenfalls Befestigungslöcher 33 aufweisenden Verbindungsträgers 4d miteinander verbunden werden, z.B. durch Verschrauben.

In Figur 6 ist eine teilmontierte Anordnung an einer Seite eines Carports gezeigt: Zu sehen ist der Oberteil des Verbindungsflansches 32 mit den Ausschnitten 39. Der untere Teil des Verbindungsflansches 32 ist nicht zu erkennen, da in der Zeichnung vom montiert dargestellten Verbindungsträger 4d mit seinen Befestigungslöchern 33 verdeckt.

Zur weiteren Verdeutlichung ist in Fig. 8 eine teilgeschnittene Ansicht von schräg vorne mit abgedichtet (Falz-Dichtung 14) montierten Plattenelementen 3 dargestellt. Wie zu erkennen ist, ist der Verbindungsträger 4d von gleichem Profil wie die Längs- und Querträger 4a, 4b. Der Verbindungsträger 4d ist mit Verschraubungen 34 an den Verbindungsflansch 32 montiert, und zwar in diesem bevorzugten Beispiel derart, daß der Verbindungsflansch 32 zwischen die beiden Schenkel des U-Profils eingreift. Dadurch ist auf einfache Weise Wasserdichtheit gewährleistet. Prinzipiell wäre auch die andere Montagevariante möglich, bei der der Verbindungsflansch 32 an der Außenseite des Verbindungsträgers 4d anliegt. Dann aber müsste zwischen Verbindungsflansch 32 und Verbindungsträger 4d eine Dichtung angeordnet werden. Außerdem wäre die Montage aufwendiger.

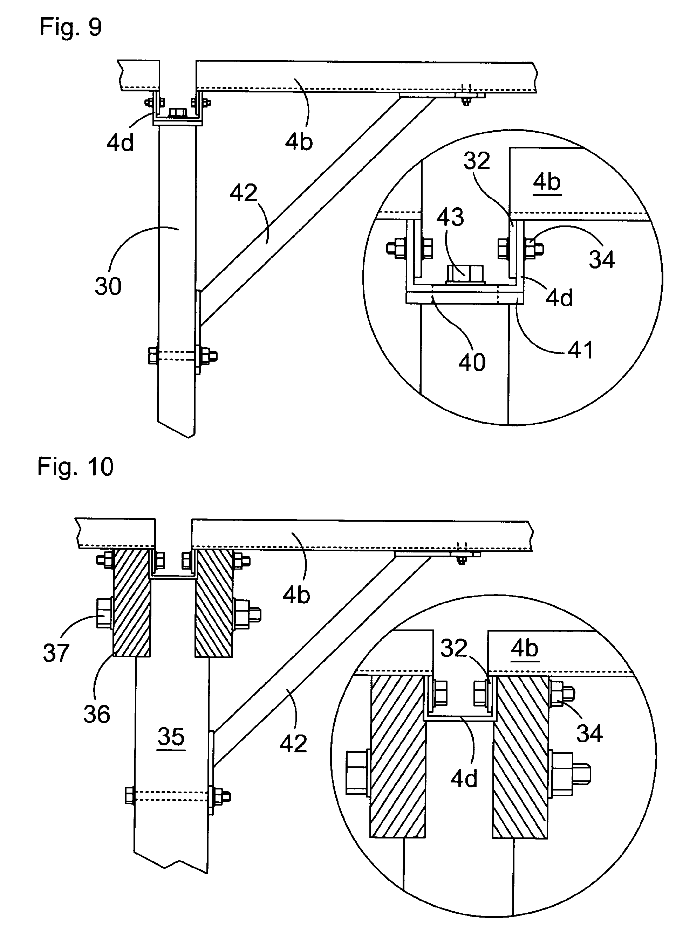

In Figur 9 ist die Verbindung eines Tragrahmens 1 mit einem Metallpfosten 30 im Detail geschnitten dargestellt, und zwar in einer um 90 Grad gegenüber der Darstellung in Fig.6 gedrehten Ansicht. Am Metallpfosten 30 ist oben eine Befestigungsplatte 41 (s.auch Fig. 6) angebracht. Darüberhinaus ist eine Querverstrebung 42 zwischen Pfosten und einem Querträger 4b vorgesehen. Wie bereits im Zusammenhang mit den Längsverstrebungen 31 erwähnt, braucht auch eine Querverstrebung 42 nicht an jedem Metallpfosten 30 vorhanden sein, je nach statischen Erfordernissen. Die Detailgestaltung der Befestigung der Querverstrebung 42 ist hier nicht wesentlich, sie liegt im Können des Fachmannes. Die Montage auf der Baustelle erfolgt derart, daß, nachdem zuvor alle Metallpfosten 30 bauseits auf ihren Fundamenten befestigt worden sind, alle Verbindungsträger 4d auf die Metallpfosten 30 aufgelegt und fest mit diesen und mit den Längsverstrebungen 31 verbunden werden. Hier im Beispiel sind Verschraubungen 43 vorgesehen, mit denen der Verbindungsträger 4d mit den Befestigungsplatten 41 verbunden wird. Die danach erfolgende Befestigung der Längsverstrebungen 31 kann auf gleiche Weise geschraubt erfolgen. Danach werden mit einem Hebemittel die bereits fertig vormontierten Tragrahmen 1 (Vormontage incl. aller Solarelemente samt Verkabelung bzw. Verrohrung) mit den Verbindungsflanschen 32 in die Verbindungsträger 4d eingehängt und mittels der Verschraubungen 34 festgeschraubt. Schließlich können die Querverstrebungen 42, wie hier zeichnerisch nur angedeutet, an den Metallpfosten 30 und an den Querträgern 4b befestigt werden. Solcherart kann die Montage modulweise Tragrahmenfeld für Tragrahmenfeld in Serie erfolgen und die Tragrahmen 1 zu einem gesamten, eine ganze Carport-Zeile abdeckenden Rahmengestell 38 zusammengefügt werden.

Der Bau eines erfindungsgemäßen Rahmengestells 38 ist nicht nur im Zusammenhang mit einem Carport möglich und von der Erfindung umfasst.

Soll, um ein weiteres Beispiel zu benennen, ein Vordach mit einem erfindungsgemäßen Tragrahmen bzw. Rahmengestell 38 gebaut werden, so kann an der Hausmauer waagrecht ein Haltebalken angebracht werden. In Abstand von der Hausmauer werden mehrere Metallpfosten 30 oder Holzpfosten 35 mit Zange 36 auf Fundamente gesetzt. Verbindungsträger 4d bzw. Randträger 4c werden senkrecht von der Hausmauer weg verlaufend einerseits auf den Haltebalken, andererseits auf Metall- oder Holzpfosten 30,35 aufgelagert und befestigt. Dann können, wie beim Bau des Carports 29, die vormontierten Tragrahmen 1 in die Verbindungsträger 4d bzw. Randträger 4c eingehängt und zum erfindungsgemäßen Rahmengestell 38 zusammengefügt und verschraubt werden.

In analoger Weise kann z.B. ein erfindungsgemäßes Rahmengestell 38 auch auf einem Scheunendach Anwendung finden. Es entfallen in diesem Fall die Metall- oder Holzpfosten 30, 35 ganz. Vielmehr werden die Verbindungsträger 4d statt auf Pfosten auf Querbalken des Dachstuhls aufgebracht oder auf Pfetten, wenn die Abstände zuvor abgestimmt wurden.

Weitere Anwendungsmöglichkeiten sind Unterstände jeglicher Art, angefangen von landwirtschaftlichen Unterständen bis hin zu Personenunterständen, Bahnsteigüberdachungen usw.

Es sei an dieser Stelle erwähnt, daß es z.B. aus logistischen Gründen vorteilhaft sein kann, im Werk nur Tragrahmen 1 vorfertigen zu lassen, die lediglich aus Längs- 4a und Querträgern 4b sowie an allen vier Seiten angeordneten (z.b. angeschweißten) Verbindungsflanschen 32 bestehen. Bei der Vormontage im Handwerksbetrieb oder auf der Baustelle können dann Randträger 4c (z.B. unten und oben) an die Verbindungsflansche 32 angeschraubt und danach mit den Plattenelementen 3 komplettiert werden. Diese vormontierten Tragrahmen 1 können dann, wie oben beschrieben in die vorbereiteten, auf den Metallpfosten 30 befestigten Verbindungsträger 4d eingehängt werden.

Alternativ ist es selbstverständlich aber auch möglich, im Herstellungswerk Tragrahmen 1 mit z.B. nur zwei längsseitig angebrachten Verbindungsflanschen (32) sowie oberen und/oder unteren fest verbundenen (angeschweißten) Randträgern 4c herzustellen und diese Bauteile dann vor Ort nur noch mit den Plattenelementen 3 zu komplettieren und schließlich endzumontieren.

Wenn ein hölzernes Untergestell aus Holzpfosten 35 und Zange 36 vorgesehen ist, können die zu einem Rahmengestell 38 zusammengefasste Tragrahmen 1 auf der Holz-Unterkonstruktion wie aus Fig. 10 ersichtlich befestigt werden.

Zwischen die beiden, die Zange 36 bildenden, mittels eines Verschraubungsbolzens 37 miteinander und mit dem Holzpfosten 35 verschraubten Balken wird der Verbindungsträger 4d auf die Holzpfosten 35 aufgelegt und mit diesen sowie mit den Längsverstrebungen 31, bevorzugt aus Metall, aber auch aus Holz möglich,verbunden. In analoger Weise, wie oben bereits beschrieben, werden die einzelnen Tragrahmen 1 in die Verbindungsträger 4d eingehängt und mit diesen und dem zugeordneten Balken der Zange 36 verschraubt.

Bei dieser Konstruktion dienen die Balken der Zange 36 als die Tragrahmen 1 tragende Elemente. Der Verbindungsträger 4d braucht daher -anders als bei der zuvor erläuterten reinen Metall-Konstruktion- keine tragende Funktion erfüllen und kann somit schwächer dimensioniert werden. Er dient letztlich nur der Entwässerung.

Zur Entwässerung wird das sich in allen Trägern 4 (oberer Randträger 4c, Querträger 4b, Längsträger 4a, unterer Randträger 4c sammelnde und schließlich in den Verbindungsträgern 4d zusammenlaufende Niederschlagswasser an deren untersten Stellen in ein Fallrohr geleitet.

Anders als bei einer Unterkonstruktion aus Holz besteht bei einer Unterkonstruktion aus Metall (siehe Fig.9) die Möglichkeit, zusätzlich über die Pfosten 30 Wasser abzuleiten, um die Gefahr des Überlaufens bei großen anfallenden Wassermassen zu verhindern. Dazu werden sowohl in Verbindungsträgern 4d als auch in Befestigungsplatten 41 an aufeinander zu liegen kommenden Stellen Durchbrechungen 40 vorgesehen. Das Wasser kann dann in die Pfosten 30 einlaufen, aus denen es unten abgeleitet werden kann.

### Bezugszeichenliste:

- 1: Tragrahmen
- 2: Rahmenfeld
- 3: Plattenelement
- 4: Träger
- 4a: Längsträger
- 4b: Querträger
- 4c: Randträger
- 4d: Verbindungsträger
- 5: U-Profil
- 6: Innenschenkel
- 7: Klemmelement
- 7a: beidseitiges Klemmelement
- 7b: einseitiges Klemmelement
- 8: wasserführender Grund
- 9: Kanal
- 10: Oberseite
- 11: Dichtung
- 12: Anzugselement
- 13: Befestigungselement
- 14: Falz-Dichtung
- 15: Kreuzungspunkt
- 16: Seitenflügel
- 17: eingelassene Flachdichtung
- 18: aufgeklebte Flachdichtung
- 19: Profil-Flachdichtung
- 20: Blockförmige Dichtung
- 21: Kleber
- 22: Kastenprofil
- 23: Versteifungsblech
- 24: Loch
- 25: Hakenschraube
- 26: Nut
- 27: Ausnehmung
- 28: Seitenwandungen
- 29: Carport
- 30: Metallpfosten
- 31: Längsverstrebung
- 32: Verbindungsflansch
- 33: Befestigungslöcher
- 34: Verschraubung
- 35: Holzpfosten
- 36: Zange
- 37: Verschraubungsbolzen
- 38: Rahmengestell
- 39: Ausschnitt
- 40: Durchbrechung
- 41: Befestigungsplatte
- 42: Querverstrebung
- 43: Verschraubung
- 44: Halteflügel

## Patentansprüche

1. Tragrahmen (1) zur Befestigung von Plattenelementen (3) zur geneigten Überdachung einer Grundfläche, mit parallel mit Abstand zueinander angeordneten und miteinander verbundenen, Rahmenfelder (2) bildenden Trägern (4) aus Längs- (4a) und Querträgern (4b), wobei die Oberseiten (10) der Längs- (4a) und Querträger (4b), auf der die Plattenelemente (3) aufliegen, eine plane Ebene bilden, die Abstände der Träger (4) an die Abmessungen der Plattenelemente (3) derart angepasst sind, daß in Montagelage in einem Rahmenfeld (2) jeweils ein Plattenelement (3) mit teilweiser Überdeckung der zugeordneten Trägerabschnitte zu liegen kommt, und die Träger (4) Kanäle (9) zur Sammlung und Ableitung von Niederschlagswasser aufweisen,
**dadurch gekennzeichnet, dass** der Tragrahmen (1) als selbsttragendes vorgefertigtes Bauteil ausgeführt ist, und die Träger (4) mindestens aus in derselben Ebene stumpf aufeinanderstoßenden und wasserdicht miteinander verbundenen, gleichzeitig die Kanäle (9) zur Wasserführung bildenden Längs- (4a) und Querträgern (4b) gleichen Profils bestehen, so daß der wasserführende Grund in den Längs- (4a) und Querträgern (4b) in einer Ebene liegt.

2. Tragrahmen (1) nach Anspruch 1, **dadurch gekennzeichnet, daß** die Träger (4) zusätzlich mindestens einen Randträger (4c) gleichen Profils wie die Längs- (4a) und Querträger (4b) umfassen, und daß Randträger (4a) untereinander sowie mit den Längs- (4a) und Querträgern (4b) stumpf aufeinanderstoßend wasserdicht derart verbunden sind, daß der wasserführende Grund (8) in den Randträgern (4c) in derselben Ebene liegt, wie in den Längs- (4a) und Querträgern (4b).

3. Tragrahmen (1) nach Anspruch 1 oder 2, **dadurch gekennzeichnet, daß** die Träger (4) zusätzlich mindestens einen Randträger (4c) umfassen, der in einer gegenüber den Längs- (4a) und Querträgern (4b) tieferliegenden Ebene angeordnet ist, so daß der wasserführende Grund (8) in dem oder den Randträger(n) (4c) tiefer liegt als in den Längs-(4a) und Querträgern (4b).

4. Tragrahmen (1) nach einem der vorhergehenden Ansprüche, **dadurch gekennzeichnet, daß** an mindestens einer Randseite des Tragrahmens (1) ein mit den jeweiligen Stirnseiten von rechtwinklig einmündenden Längs-(4a) oder Querträgern (4b) und Randträgern (4d) fest verbundener, flacher Verbindungsflansch (32) vorgesehen ist, wobei längs an dem Verbindungsflansch (32) wahlweise ein Randträger (4c) befestigbar ist oder ein Verbindungsträger (4d) zum Anschluß eines weiteren Tragrahmens (1).

5. Tragrahmen (1) nach Anspruch 4, **dadurch gekennzeichnet, daß** der längs dem Verbindungsflansch (32) befestigte Verbindungsträger (4d) oder Randträger (4c) gleiches Profil aufweisen wie die Längs- (4a) und Querträger (4b).

6. Tragrahmen (1) nach Anspruch 4 oder 5, **dadurch gekennzeichnet, daß** der Verbindungsflansch (32) dem Querschnitt der Stirnseiten von den einmündenden Längs- (4a) oder Querträgern (4b) und Randträgern (4d) entsprechende Ausschnitte (39) aufweist.

7. Tragrahmen (1) nach Anspruch 6, **dadurch gekennzeichnet, daß** der längs am Verbindungsflansch (32) befestigte Randträger (4c) oder Verbindungsträger (4d) an seiner dem Verbindungsflansch (32) zugewandten Seitenwandung dem Querschnitt der Stirnseiten der einmündenden Längs- (4a) oder Querträger (4b)und Randträger (4d) entsprechende Ausschnitte (39) aufweist und mit seinem wasserführenden Grund in derselben Ebene liegt, wie der wasserführende Grund (8) der Längs- (4a) und Querträger (4b).

8. Tragrahmen (1) nach einem der Ansprüche 4 bis 6, **dadurch gekennzeichnet, daß** der längs am Verbindungsflansch (32) befestigte Randträger (4c) oder Verbindungsträger (4d) in einer gegenüber den Längs- (4a) und Querträgern (4b) tieferliegenden Ebene angeordnet ist, so daß der wasserführende Grund (8) im Randträger (4c) oder Verbindungsträger (4d) tiefer liegt, als in den Längs- (4a) und Querträgern (4d).

9. Tragrahmen (1) nach einem der vorhergehenden Ansprüche, **dadurch gekennzeichnet, daß** als Träger (4) nach oben offene U-Profile (5) oder H-Profile mit senkrecht angeordneten freien Schenkeln vorgesehen sind, oder daß in alternativer Ausführung H-Profile mit waagrecht angeordneten freien Schenkeln oder geschlossene Kastenprofile (22) als Träger (4) verwendet werden, wobei in der alternativen Ausführung die seitliche Führung des Niederschlagswassers durch die Seitenwandungen (28) der Plattenelemente (3) erfolgt.

10. Tragrahmen (1) nach einem der vorhergehenden Ansprüche, **dadurch gekennzeichnet, daß** die Plattenelemente (3) vormontiert mittels Klemmelementen (7) oder durch Klebung an den Trägern (4) befestigt sind.

11. Tragrahmen (1) nach einem der vorhergehenden Ansprüche, **dadurch gekennzeichnet, daß** zwischen Trägern (4) und Plattenelementen (3) eine Dichtung (11) vorgesehen ist.

12. Tragrahmen (1) nach einem der vorhergehenden Ansprüche, **dadurch gekennzeichnet, dass** ein Plattenelement (3) aus mehreren miteinander verbundenen Einzelelementen zusammengesetzt ist.

13. Tragrahmen (1) nach einem der vorhergehenden Ansprüche, **dadurch gekennzeichnet, dass** als Plattenelemente (3) oder Einzelelemente thermische oder photovoltaische Solarelemente vorgesehen sind, wobei diese mitsamt ihrer Verkabelung oder Verrohrung auf den Trägern (4) vormontiert sind.

14. Rahmengestell (38), bestehend aus einer Mehrzahl von miteinander verbundenen, vorgefertigten und vormontierten Tragrahmen (1) nach einem der Ansprüche 4 bis 13, **dadurch gekennzeichnet, daß** die Tragrahmen (1) jeweils an den Verbindungsseiten zum nächsten Tragrahmen (1) mit einem Verbindungsflansch (32) versehen sind, und
daß an diesem Verbindungsflansch (32) ein den miteinander verbundenen Tragrahmen (1) gemeinsamer Verbindungsträger (4d) befestigt ist.

15. Carport (29), bestehend aus einem auf einer Mehrzahl von Metallpfosten (30) oder Holzpfosten (35) mit Zangen (36) aufgelagerten und befestigten, vorgefertigten und komplett vormontierten einzelnen Tragrahmen (1) gemäß einem der Ansprüche 4 bis 13 oder Rahmengestell (38) gemäß Anspruch 14.
